# EUROPEAN PATENT APPLICATION

(11) **EP 2 685 741 A1**
(43) Date of publication of application: **15.01.2014**
(21) Application number: 13174047.4
(22) Date of filing: 27.06.2013
(51) Int. Cl.: H04N 21/47, H04N 21/4725, H04N 21/845, H04N 21/858

(54) **Video player for online video containing tag content**

(30) Priority: 10.07.2012 GB 201212211
(71) Applicant: WireWax Limited, London W1T 1DG (GB)
(72) Inventor: Callanan, Steve James, London, Greater London SW18 1NE (GB)
(74) Representative: MacLean, Martin David

(57) **Abstract**

A video player for online video containing tag content is adapted to display the location of the tag content within the video on a timeline which has a variable non-linear scale that expands around a location of a GUI pointer placed over the timeline.

## Description

### FIELD OF THE INVENTION

The present invention relates to video distribution, which includes both the distribution of video over the internet to computing devices and the distribution of video via the Internet, or other forms of network, or via readable media such as DVDs) to various devices such as computing devices, television sets, handheld devices such as PDAs, tablets, smartphones and the like.

### BACKGROUND ART

Online video is now an established communication tool, being used for social purposes and for commercial marketing and other purposes. Indeed, the success of online video is such that content-enabled video services are being developed, allowing functionality to be co-delivered with the video such as clickable hyperlinks within the video frame that lead the viewer to a specific website or other internet address.

US 7620914 discloses the incorporation of clickable hyperlinks into a viewable video, sending the hyperlink data in a separate stream alongside the video data. The two are then re-united in the video player and the hyperlinks are displayed over the video data, allowing a user to click the hyperlink as and when desired.

US 7817822 discloses a motion tracking system for such hyperlinks. This allows a user to associate the hyperlink with a specific feature in a frame of the video, following which the motion tracking system detects movement of that feature in subsequent frames and adjusts the position of the hyperlink accordingly. As a result, the hyperlink appears to "float" over the feature and follow it as it moves in the video. The hyperlink can therefore be associated with the feature, such as a link offering more information on or an opportunity to purchase the item forming that feature. Multiple hyperlinks can then be safely added to a video or video segment, with the meaning of each hyperlink remaining clear to a viewer at all times.

We refer to such hyperlinks, together with any other items that may be inserted into he video to allow the user to interact with or gain further information from the video, as "tags".

### SUMMARY OF THE INVENTION

When video is played via an online player, it is usual to provide a timeline illustrating the degree of progress through the duration of the video. Such timelines usually have an elongate line representing a time period from the start of the video to the end of the video, over which is provided a marker denoting the position along that line of the current playback position.

It is desirable to add to the timeline other markers denoting the position of tags within the video (such as, for example, by representing the start of a subclip which contains one or more tags), to help viewers locate the tags if browsing the video. Where the tag exists in the video for a length of time, such as when following an object, the marker can denote the start, or the end, or the midpoint of the tag, or its duration. However, a problem arises in that the timeline only occupies a limited space but may be called upon to contain a large number of markers which may be very closely-spaced at some points in the video.

The present invention therefore provides a video player for online video containing tag content, adapted to display the location of the tag content within the video on a timeline which has a variable non-linear scale that expands around a location of a GUI pointer placed over the timeline.

A video player for tagged online video can thus comprise means for receiving a stream of video data and tag data, the tag data comprising details of a plurality of tags including, for each tag, a link to display during video playback and a time to display the link, a video display means adapted to display the video data and a timeline illustrating in graphical form at least a current playback position within the duration of the video together with times at which tags are to be displayed, the video player being adapted to receive information as to a pointer location and click event locations and being adapted, in the event of a click event on the timeline, to move the current playback position of the video to a playback position corresponding to the location on the timeline of the click event and, when the pointer location lies over the timeline, expand the local scale of the timeline around the pointer location.

The time at which to display the link can be expressed as a frame number, for ease of reference. The tag data can also include a location on the video frame at which the tag is to be displayed, to allow it to float over the object in the video with which it is intended to be associated.

### BRIEF DESCRIPTION OF THE DRAWINGS

An embodiment of the present invention will now be described by way of example, with reference to the accompanying figures in which;
Figure 1 shows an example of an online player window according to the present invention;
Figure 2 shows the online player window of figure 1 while a video is playing;
Figures 3 and 4 show the clarification of tag identities according to the present invention.

### DETAILED DESCRIPTION OF THE EMBODIMENTS

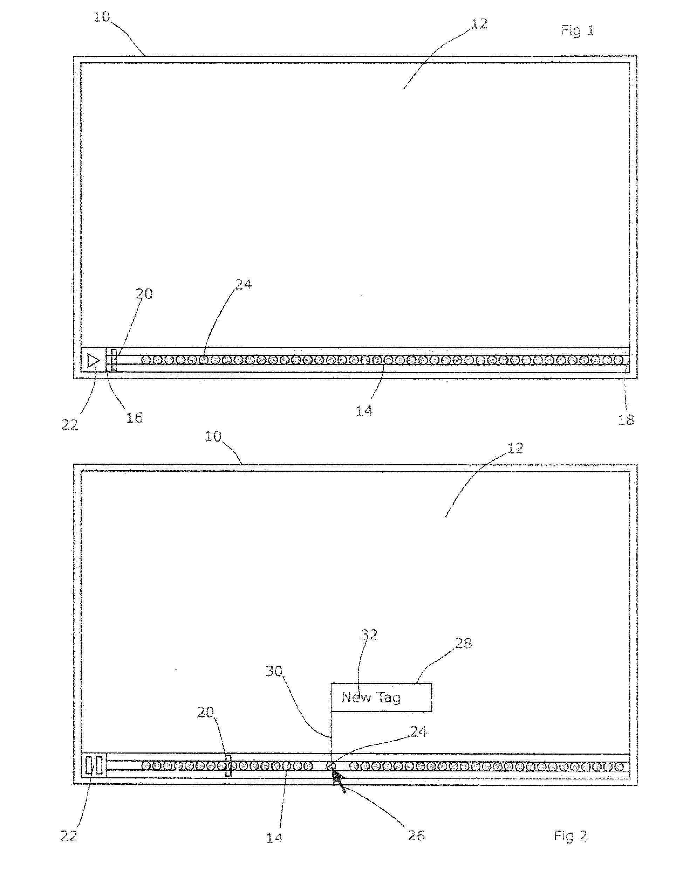

Referring to figure 1, a video player for online video is configured to provide a window or embedded element 10 which has two main sections, a video frame 12 in which video content can be displayed, and a timeline 14 which illustrates the progress of the current playback point from a start 16 of the video to an end 18 of the video. A progress marker 20 is provided showing the current playback point along the timeline 14. The timeline is usually positioned below the video frame 12 but need not be. A play/pause button 22 is also provided, in this case adjacent the timeline (or can be omitted in favour of an alternative gesture such as clicking the video frame). In the state illustrated in figure 1, the video is yet to be started and thus the play/pause button 22 shows a "play" icon and the progress marker 20 is at the extreme left edge of the timeline 14.

Other controls or features may of course be provided as desired, such as editing functions, other playback controls such as an audio volume or mixer control, or the like.

A number of tag markers 24 are provided on the timeline 14, indicating that there is a tag within the video at that point along the timeline. For the purpose of illustration figure 1 shows a timeline 14 filled with equally-spaced tag markers 24 apart from the start and the very end of the video which have no markers. In real life, this would be most unlikely to be the case, of course.

Figure 2 shows the same window a short while later after the video has been allowed to run for a short period. The play/pause button 22 now shows a "pause" icon as the video is currently playing, and the progress marker 20 has moved along the timeline 14. A mouse pointer 26 provided by the underlying operating system has been moved by the user to a point over one of the tag markers 24. This has prompted the video player to take two steps.

First, the scale of the timeline 14 has been expanded locally around the mouse pointer 26. The scale of the remaining parts of the timeline 14 has been contracted slightly to compensate for this while keeping the overall length of the timeline static. As only a small part of the timeline 14 has been expanded, the effect of this contraction is minimal and largely not noticeable. The expansion can be seen by comparing the timeline as shown in figure 2 with the timeline as shown in figure 1 when the mouse pointer is located away from the timeline. The result is that the tag markers 24 are more widely spaced around the mouse pointer 26, allowing more precise control of exactly where on the timeline a click event is made and separating closely-spaced tag markers more clearly.

Second, when the mouse pointer hovers over the timeline 14, the video player activates pop-up boxes for the nearby tag or tags. One such box 28 is seen in figure 2; it includes a lead line 30 indicating the tag marker with which it is associated and a short text summary 32 indicating the content of the tag (in this case in a default format). Where there is more than one nearby tag, a 'preview' or stack of tag previews can be made to appear for that subclip. This assists users in identifying the tag of interest. Thus, whilst clicking on the timeline will make the video jump to that playback point, clicking a preview in the stack will both take the user to the point in the video and activate the tag that it represents.

It should be noted that the underlying operating system in which the video player is operating is not especially important to the present invention. The player of the present invention may be coded in any operating system that is preferred, or may be encoded in an OS-independent platform. Equally, whilst some operating systems may allow for windows and other program elements to be controlled by a mouse pointer, others may allow for control via touch-screen interfaces, gesture interpreters, hand-held controllers, or the like. Such alternative forms of input are equally applicable to the present invention.

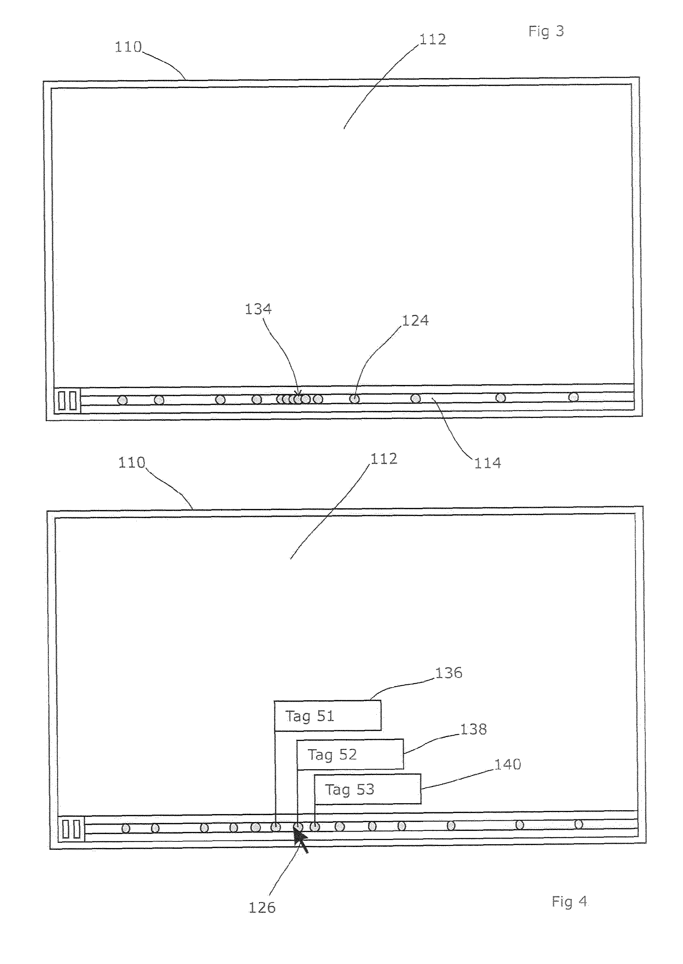

Figures 3 and 4 show the operation of the present invention in a more typical application. Figure 3 shows a video player window 110 with a video frame 112 in which a video is playing. A timeline 114 towards the base of the player window 110 shows a number of tag markers 124 which are distributed irregularly along the timeline corresponding to the distribution of tags within the video. A cluster 134 of tags is evident in one area.

Figure 4 shows the result when the mouse pointer 126 is placed over the timeline 114 in the vicinity of the tag cluster 134. The timeline 114 is expanded in this area, separating the tags in the cluster and allowing them to be distinguished. Pop-up boxes 136, 138, 140 appear for the three tags that are (in this example) within a present distance from the mouse pointer 126 after expansion, and provide information as to the content of the tags concerned. Whereas the tags were previously (as shown in figure 1) difficult to distinguish and select individually, after expansion they are clearly defined.

The degree of expansion could be fixed, say (for example) a doubling or a tripling of the previous linear scale prior to expansion. We prefer to base the degree of expansion on a sine-wave function, with a linear valley around the point of precision in order to remove any movement. Alternatively, it could be actively controlled, expanding the timeline sufficient that the two nearest tags within the expanded area are a minimum number of pixels apart. An upper limit could be placed on the degree of expansion in case an administrator places two tags very closely together indeed.

It will of course be understood that many variations may be made to the above-described embodiment without departing from the scope of the present invention.

## Claims

1. A video player for tagged online video, comprising:
means for receiving a stream of video data and tag data, the tag data comprising details of a plurality of tags including, for each tag, a link to display during video playback and a time to display the link;
a video display means adapted to display;
i. the video data
ii. a timeline illustrating in graphical form at least:
a. a current playback position within the duration of the video, and
b. times at which tags are to be displayed;
the video player being adapted to receive information as to a pointer location and click event locations and being adapted to:
i. in the event of a click event on the timeline, move the current playback position of the video to a playback position corresponding to the location on the timeline of the click event, and
ii. when the pointer location lies over the timeline, expand the local scale of the timeline around the pointer location.

2. A video player according to claim 1 in which the time to display the link is expressed as a frame number.

3. A video player according to claim 1 or claim 2 in which the tag data further comprises a location on the video frame at which the tag is to be displayed.

4. A video player for online video containing tag content, adapted to display the location of the tag content within the video on a timeline which has a variable non-linear scale that expands around a location of a GUI pointer placed over the timeline.
